(19) **Europäisches Patentamt**
**European Patent Office**
**Office européen des brevets**

(11) Veröffentlichungsnummer : **0 363 363 B1**

(12) # EUROPÄISCHE PATENTSCHRIFT

(45) Veröffentlichungstag der Patentschrift :
**11.09.91 Patentblatt 91/37**

(51) Int. Cl.⁵ : **G01C 17/28**

(21) Anmeldenummer : **88901820.6**

(22) Anmeldetag : **12.02.88**

(86) Internationale Anmeldenummer :
**PCT/EP88/00104**

(87) Internationale Veröffentlichungsnummer :
**WO 88/06274 25.08.88 Gazette 88/19**

(54) ELEKTRONISCHER KOMPASS.

(30) Priorität : **17.02.87 DE 3704934**

(43) Veröffentlichungstag der Anmeldung :
**18.04.90 Patentblatt 90/16**

(45) Bekanntmachung des Hinweises auf die
Patenterteilung :
**11.09.91 Patentblatt 91/37**

(84) Benannte Vertragsstaaten :
**AT BE CH DE FR GB IT LI LU NL SE**

(56) Entgegenhaltungen :
**US-A- 3 628 254**
**Technische Information 840323 der VALVO UB**
**Bauelemente der Philips GmbH, Hamburg**
**1984**

(73) Patentinhaber : **WELLHAUSEN, Heinz**
**Trockener Kamp 92**
**W-3200 Hildesheim (DE)**

(72) Erfinder : **WELLHAUSEN, Heinz**
**Trockener Kamp 92**
**W-3200 Hildesheim (DE)**

(74) Vertreter : **Einsel, Robert, Dipl.-Ing.**
**Deutsche Thomson-Brandt GmbH Patent- und**
**Lizenzabteilung Göttinger Chaussee 76**
**W-3000 Hannover 91 (DE)**

## Beschreibung

Die Erfindung betrifft einen elektronischen Kompaß gemäß dem Oberbegriff des Anspruchs 1.

Ein derartiger elektronischer Kompaß ist bekannt durch die Technische Information Nr. 840323 (veröff. 1984) der Fa. VALVO. Die dort beschriebenen magnetoresistiven Sensoren vom Typ KMZ 10A sind ein passives Bauteil mit einer Widerstandsbrücke, an die eine Betriebsspannung angelegt ist. Der Abgleich der Brücke ändert sich in Abhängigkeit von der Größe eines den Sensor in seiner Längsrichtung durchsetzenden Magnetfeldes. An der Brückendiagonale kann daher eine Spannung abgenommen werden, deren Vorzeichen von der Richtung und deren Größe von dem Betrag des einfallenden Magnetfeldes abhängig ist. Dabei ist es bekannt, zwei derartige Sensoren um 90° gegeneinander versetzt anzuordnen, die somit die Komponenten des einfallenden Magnetfeldes in zwei zueinander senkrechten Richtungen auswerten. Durch diese beiden Komponenten, d.h. durch die Ausgangsspannungen der beiden Sensoren, ist das Magnetfeld nach Betrag und Richtung eindeutig definiert.

Derartige Sensoren haben eine unvermeidbare Offetspannung, d.h. eine im Ausgangssignal vorhandene Gleichspannungskomponente, die insbesondere durch einen unvollkommenen Abgleich der Brücke und sonstige Umwelteinflüsse entsteht. Diese Offsetspannung ist mit z.B. ± 10-20 mV wesentlich größer als die Signalspannung im Bereich einiger µV.

Zum Ausgleich dieser Offsetspannung ist es bekannt, den Sensoren eine Spule zuzuordnen, die mit einer Taktspannung gesteuert ist und in den Sensoren ein umgeschaltetes Erregerfeld erzeugt, das senkrecht zu der Empfindlichkeitsrichtung der Sensoren steht. Durch dieses Erregerfeld wird die Empfindlichkeitsrichtung der Sensoren mit der Frequenz der Taktspannung periodisch umgeschaltet. Das Ausgangssignal der Sensoren ist dann keine Gleichspannung, sondern eine Wechselspannung mit der Frequenz der Taktspannung. Dadurch ist es möglich, das eigentliche Nutzsignal von der Offsetspannung zu trennen. Ein derartiger Kompaß ist beschrieben in der VALVO-Schrift "Technische Informationen", Nr. 861105 (veröff. 1986), Seite 1-17, insbesondere Bild 19 und 20.

Die von den Sensoren abgegebenen Nutzsignale müssen indessen für ihre Weiterverarbeitung verstärkt werden. Einerseits ist ihre Amplitude für die weitere Signalverarbeitung zu gering. Andererseits ändert sich das Erdfeld regional stark, so daß die Verstärkung jeweils angepaßt und geregelt werden muß. Da geringe Unterschiede in der Verstärkung der einzelnen Signale das Meßergebnis bestimmen und insbesondere bei der Regelung mehrere Verstärkungswege für die Signale der beiden Sensoren ein Gleichlauf in der Verstärkung praktisch nicht erreichbar ist, entstehen relativ grobe Ungenauigkeiten in der Messung, die den Einsatz derartiger magnetoresistiver Sensoren begrenzen.

Der Erfindung liegt die Aufgabe zugrunde, derartige Streuungen und Abhängigkeiten vom Abgleich der Sensoren und sonstigen Parametern zu verringern und die Genauigkeit des mit derartigen Sensoren bestückten Kompasses zu erhöhen.

Diese Aufgabe wird durch die im Anspruch 1 beschriebene Erfindung gelöst. Vorteilhafte Weiterbildungen der Erfindung sind in den Unteransprüchen beschrieben.

Es ist auch bekannt (US-A 3628254), bei einem derartigen Kompaß drei Sensoren unter einem Winkel von 120° anzuordnen Dieser Kompaß enthält aber keine Erregerspule zum Umpolen der Empfindlichkeitsrichtung der drei Sensoren.

Die Erfindung beruht auf folgenden Erkenntnissen und Überlegungen. Bei der Anordnung von drei gleichen Sensoren unter einem Winkel von 120° ist jeweils die Summe der Ausgangssignale der drei demselben Magnetfeld ausgesetzten Sensoren gleich 0. Das beruht darauf, daß die Summe der drei Augenblickswerte einer Sinusspannung im Abstand von 120° stets 0 ist. Das ist gleichbedeutend damit, daß die Ausgangssignale der drei unter 120° versetzten und in einem konstanten Magnetfeld gedrehten Sensoren unabhängig von der Größe dieses Magnetfeldes stets 0 ist, unter der Voraussetzung, daß die drei um 120° versetzten Ausgangssignale gleiche Amplitude haben. Wenn somit die Ausgangssignale der drei Sensoren jeweils zeitlich kurz nacheinander getastet werden, so ist auch deren Summe 0. Die so gewonnen Signale sind voneinander unabhängig, da sie keinen Gleichspannungsanteil enthalten, und können daher über einen gemeinsamen Wechselspannungsverstärker geführt werden. Dessen Verstärkung indessen ist in vorteilhafter Weise unkritisch, da die Verstärkung auf das Meßergebnis nicht eingeht, sondern das Meßergebnis lediglich durch das Verhältnis der Amplituden der Ausgangssignale der Sensoren bestimmt ist. Daher geht auch jegliche Änderung der Verstärkung, z.B. durch Langzeitänderungen, Temperatureinflüsse und Regelung der Verstärkung auf das Meßergebnis nicht ein. Voraussetzung dabei ist, daß die störende Offestspannung im Signal beseitigt ist. Das wird erreicht durch eine besonders vorteilhafte Schaltung gemäß Anspruch 9.

Der Abgleich der gesamten Schaltungsordnung wird daher besonders einfach, da im wesentlichen nur noch ein Abgleich auf die unterschiedliche Empfindlichkeit der drei Sensoren erforderlich ist. Temperatureinflüsse wirken sich auf die drei Sensoren gleichmäßig aus, beeinflussen also die drei Ausgangssignale der Sensoren gleichmäßig und gehen daher in vorteilhafter Weise auf das Meßergebnis, das auf dem Verhältnis dieser Signale beruht, nicht ein. Durch den erfindungsgemäßen Kompaß und die zugeordnete Schaltung zur Auswertung der Signale kann eine Genauigkeit in der Messung der Richtung des Erdfeldes von etwa 1/2° und eine Auflösung von ca 1/10° erreicht werden, also wesentlich höhere Werte als bei einer herkömlichen mechanischen Kompaßnadel. Der Kompaß zusammen mit der Auswertschaltung ist an unterschiedliche Navigationssysteme anpaßbar und eignet sich auch für unterschiedliche Darstellungen des Meßergebnisses, z.B. in Form eines Vektors auf einem Bildschirm oder zur digitalen Anzeige der Richtung des Erdmagnetfeldes. Durch die Erfindung werden die noch bestehenden Unzulänglichkeiten der bekannten Sensoren weitestgehend ausgeglichen und deren Einsatzbereich für die Messung des Erdmagnetfeldes erweitert. Die Erfindung ist besonders vorteilhaft anwendbar bei den sogenannten magnetoresistiven Sensoren, deren ohmscher Widerstand von der Größe und Richtung des sie durchsetzenden Magnetfeldes abhängig ist und wie sie in der genannten Technischen Information der Firma VALVO beschrieben sind. Derartige Sensoren sind besonders klein und ermöglichen einen sehr engen Aufbau für den gesamten Kompaß.

Bei einer Ausführungsform der Erfindung gemäß Anspruch 9 erfolgt auf einfache Weise eine Beseitigung der unerwünschten Offsetspannung, indem während der ersten Halbwelle der das Erregerfeld erzeugenden Taktspannung ein Kondensator auf den Wert der vom Sensor kommenden Spannung aufgeladen und in der zweiten Halbwelle auf den weiteren Signalweg durchgeschaltet wird, wobei die durchgeschaltete Spannung gleich der Differenz zwischen den Spitzenspannungen der beiden Halbwellen ist und somit die störende Offsetspannung beseitigt ist. Bei einer anderen Ausführungsform gemäß den Ansprüchen 6, 7 wird der für die drei Signalspannungen der Sensoren gemeinsam verwendete Wechselspannungsverstärker immer so geregelt, daß das Signal mit der größten Amplitude gerade den vollen Aussteuerbereich erreicht und z.B. im Signal angeordnete A/D-Wandler voll ausgesteuert werden. Dadurch wird eine größere maximale Auflösung erreicht, weil dann zumindest für das maximale Signal der gesamte Aussteuerbereich des Wandlers ausgenutzt wird und alle Stufen des Wandler für die digitalen Signale, z.B. 256, ausgenutzt werden. Das ist dadurch möglich, daß die Verstärkung des Verstärkers, wie bereits erläutert, auf das Meßergebnis keinen Einfluß hat. Die Regelspannung für den Verstärker, die somit von der Amplitude des größten Signals der drei Sensoren abhängig ist, kann daher gemäß Anspruch 8 auch als eine Anzeige für die absolute Größe des Erdfeldes gewonnen werden.

Für die Ermittlung der Feldrichtung sind an sich zwei gegeneinander versetzte Sensoren ausreichend, so daß die drei Signale der drei Sensoren an sich redundant sind. Daher können gemäß einer Weiterbildung der Erfindung nach Anspruch 5 insgesamt drei Ergebnisse für den Winkel gebildet werden, die theoretisch übereinstimmen müssen. So kann zur Erhöhung der Genauigkeit oder zur Ausschaltung offensichtlicher Fehlmessungen auf den drei Ergebnissen für die Darstellung jeweils der Mittelwert gebildet werden. Der Kompaß mit den drei gegeneinander versetzten Sensoren und der Spule für das Erregerfeld kann als kompakte, ggf. vergossene gekapselte Einheit ausgebildet sein, wodurch die Lage der drei Sensoren unter 120° mit großer Genauigkeit eingehalten werden kann.

Die Erfindung wird im folgenden anhand der Zeichnung an einem Ausführungsbeispiel erläutert. Darin zeigen

Fig. 1    im Prinzip den Aufbau für den erfindungsgemäßen Kompaß,

Fig. 2    eine Schaltung zur Beseitigung der Offsetspannung,

Fig. 3    einen Spannungsverlauf zur Erläuterung der Fig. 2,

Fig. 4    eine vollständige Schaltung zur Auswertung der Signale der drei Sensoren und

Fig. 5    Spannungsdiagramme zur Erläuterung der Schaltung gemäß Fig. 4

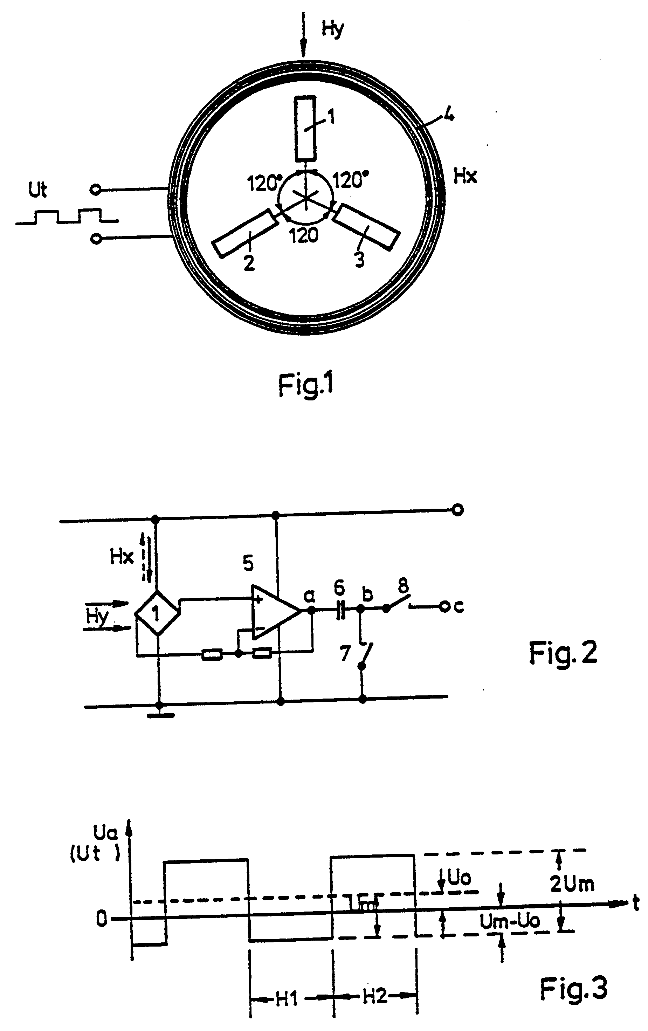

In Fig. 1 sind drei magnetorisistive Sensoren 1, 2, 3, z.B. vom Typ KMZ 10 A der Fa. VALVO, unter einem Winkel von 120° angeordnet. Das bedeutet, daß die Längsachsen der drei Sensoren 1, 2, 3, deren zugehörige Feldkomponente Hy ausgewertet wird, einen Winkel von 120° zueinander bilden. Die Sensoren 1, 2, 3 sind von einer Spule 4 umgeben, die mit einer Taktspannung Ut gespeist wird. Die Spule 4 erzeugt ein Erregerfeld Hx, das senkrecht zu Hy steht und die Empfindlichkeitsrichtung der Sensoren 1, 2, 3 periodisch umpolt. Die Summe der Ausgangssignale der Sensoren 1, 2, 3 ist durch den 120°-Versatz nach dem Drehfeld-Prinzip unabhängig von der Lage und Richtung des Erdmagnetfeldes Hy und der räumlichen Lage des Kompaß stets gleich 0. Jedes der Signale von den Sensoren 1, 2, 3 hat neben der durch die Taktspannung Ut erzeugten Nutz-Wechselspannung eine unerwünschte Offsetspannung durch Fehlabgleich der in den Sensoren enthaltenen Widerstand-Brückenschaltung oder sonstige Abweichungen.

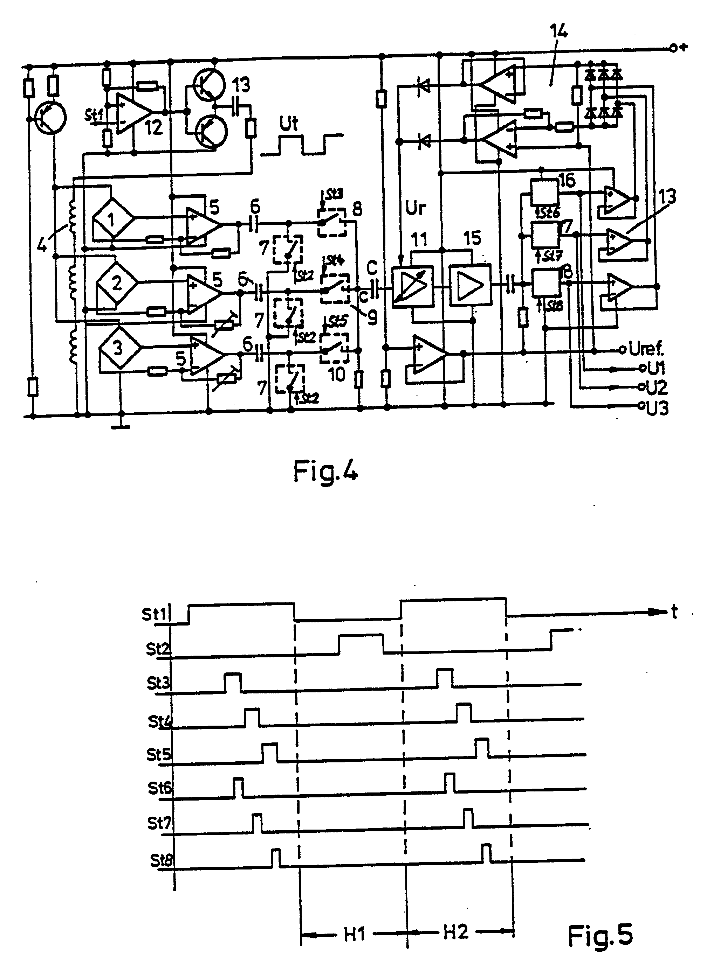

Fig. 2, 3 zeigen eine Schaltung, mit der die für die Auswertung unerwünschte Offsetspannung in den Ausgangssignalen jeweils eines Sensors beseitigt werden kann. Der Sensor 1 ist von der Erdfeldkomponente Hy und außerdem von der Erregerfeldkomponente Hx, die periodisch umgeschaltet ist, beaufschlagt. Die dadurch gewonnene Spannung Ua gelang auf den Differenzverstärfer 5 und erscheint somit am Ausgang a. Während der ersten Halbwelle H1 der Spannung Ua (entsprechend Ut) wird der Schalter 7 durch eine synchrone Schaltspannung geschlossen. Durch den niederohmig ausgebildeten Ausgang a und den geerdeten Punkt b lädt sich der Kondensator 6 in sehr kurzer Zeit auf die Spannung am Punkt a auf. Diese Spannung hat gemäß Fig. 3 den Wert Uo-Um, wobei Um die Amplitude der Wechselspannung und Uo der Wert der Offsetspannung ist. In der zweiten Halbwelle H2 ist der Schalter 7 geöffnet und während einer kurzen Zeit für die Signalauswertung der Schalter 8 geschlossen. Der Kondensator 6 hat weiterhin die Spannung Uo-Um mit dem negativen Pol am Punkt a. Da andererseits jetzt die Spannung am Punft a = Um + Uo ist, gelangt bei geöffneten Schalter 8 auf die Klemme c eine Spannung mit dem Wert

$$Uo + Um - (Uo - Um) = 2\,Um.$$

Es ist ersichtlich, daß in der Signalspannung am Punkt c die störende Offsetspannung Uo beseitigt ist. Das Signal am Punkt c wird daher ohne die Offsetspannung Uo der weiteren Auswertschaltung zugeführt. Eine entsprechende Schaltung ist in gleicher Form vorgesehen für die beiden anderen Sensoren 2, 3. Der Verstärker 5 ist ein Gleichspannungsverstärker mit einer geringen Verstärkung. Er dient im wesentlichen dazu, den niederohmigen Ausgang a für die Umladung des Kondensators 6 zu bilden und einen Abgleich auf unterschiedliche Empfindlichkeiten der drei Sensoren 1, 2, 3 zu ermöglichen.

Fig. 4 zeigt eine vollständige Schaltung zur Auswertung der in den Sensoren 1, 2, 3 erzeugten Signalspannungen, die die Schaltung gemäß Fig. 2 dreimal enthält. Anhand der Kurven gemäß Fig. 5 wird die Wirkungsweise erläutert. Die Spannung St1 erzeugt über den Verstärker 12 und die Endstufe 13 die Taktspannung Ut, die in der beschriebenen Weise die Spule 4 speist und dadurch das Erregerfeld Hx erzeugt. Die drei Schalter 7 werden jeweils während der ersten Halbwelle H1 der Spannung St1 und damit auch Ut durch den Impuls St2 gleichzeitig geschlossen und bewirken die schnelle Aufladung der Kondensatoren 6 auf die Ausgangspannung der Verstärker 5 gemäß Fig. 2. Die Schalter 8, 9, 10 arbeiten wie der Schalter 8 in Fig. 2, werden jedoch während der Halbwelle H2 zeitlich nacheinander durch die Impulse St3, St4, St5 kurzzeitig leitend gesteuert. Am Punkt c entstehen dadurch zeitlich nacheinander Signale, die das Ausgangssignal der drei Sensoren 1, 2, 3 darstellen und von der Offsetspannung befreit sind. Diese Gewinnung der drei Signale zeitlich nacheinander ist zulässig, weil sich die Ausgangssignale der drei Sensoren zeitlich zumindest in der erzen Zeit nicht ändern. Diese sequentiellen Signale gelangen über den Kondensator C auf den für alle drei Signale gemeinsamen Wechselspannungsverstärker 11, der durch die Regelspannung Ur geregelt ist. Die sequentiellen Signale gelangen über den weiteren Verstärker 15 gleichermaßen auf die Eingänge der drei Tast- und Halteschaltungen 16, 17, 18 (sample and hold Schaltung). Die Halteschaltungen 16, 17, 18 werden synchron, zu den Impulsen St3, St4, St5 jedoch um die Laufzeit der Verstärker zeitlich verschoben, durch die Impulse St6, St7, St8 für die Signaltastung betätigt. Jedes der drei Signale wird also während seines Auftretens in der Schaltung 16, 17, 18 gespeichert und jeweils bis zum nächsten Impuls, also der nächsten zweiten Halbwelle H2 der Spannung St1, aufrechterhalten. Auf diese Weise werden die Jeweils nur kurzzeitig vorhandenen sequentiellen Signale am Ausgang des Verstärkers 15 wieder in ständig vorhandene simultane Signale umgewandelt. Die Stufen 16, 17, 18 liefern die drei Signale U1, U2, U3. Aus dem Verhältnis von zwei dieser Spannungen, z.B. U1 und U2 oder U1 und U3 oder U2 und U3 kann dann die Richtung des Erdmagnetfeldes, dem der Kompaß ausgesetzt ist, ermittelt werden. Diese Signale stellen das Meßergebnis dar. Sie können z.B. die Richtung des gemessenen Erdmagnetfeldes in Form eines Vektors auf einem Bildschirm darstellen oder in digitaler Form in Form von Zahlenwerten die Richtung des Erdmagnetfeldes in Grad und Minuten.

Mit den Verstärkern 13, 14 wird aus den Signalen U1, U2, U3 die Regelspannung Ur für den Verstärker 11 erzeugt. Diese Regelung der Verstärkung erfolgt so, daß der Verstärker 11 durch das Signal am Punkt c mit der größten Amplitude gerade eben voll ausgesteuert ist. Durch diese ständige volle Aussteuerung werden im Signalweg liegende A/D-Wandler jeweils zumindest durch das Signal mit der größten Amplitude voll ausgesteuert, wodurch der Störabstand und die Fehlermöglichkeit verringert werden. Dann ändert sich zwar die für die Signale wirksame Verstärkung. Dadurch ergibt sich aber kein Fehler in dem Meßergebnis, weil in der Auswertschaltung für die Signale U1, U2, U3 nur das Verhältnis der Amplituden dieser Signale ausgewertet wird und nicht ihre absolute Amplitude.

Der Wert der Regelspannung Ur ist somit abhängig von der größten Amplitude des von einem Sensor ausgewerteten Erdfeldes Hy, in dem Sinne, daß bei sinkender Amplitude die Verstärkung des Verstärkers 11 erhöht wird. Daher kann die Regelspannung Ur auch als Anzeige für die absolute Größe des jeweils wirksamen, von dem Kompaß erfaßten Erdfeldes dienen.

Für die Ermittlung der Richtung des Erdfeldes genügen an sich zwei Signale, so daß das gewonnene Signal U1, U2, U3 an sich redundant ist. Deshalb können aus den Signalen insgesamt drei verschiedene Meßergebnisse für Richtung des Erdfeldes gewonnen werden, nämlich durch Vergleich von U1 und U2, von U1 und U3 und von U2 und U3. Für die Anzeige kann dann der Mittelwert dieser drei Meßergebnisse ausgewertet werden, wodurch die Genauigkeit erhöht und etwaige grobe Fehler durch zu starke Abweichungen der drei Ergebnisse erkannt werden. Die Summe der drei Signale U1, U2, U3 ist ebenfalls stets 0. Eine Abweichung von dieser Grundbedingung der Schaltung kann ebenfalls gesondert ermittelt und als Fehler erkannt und zur Eliminierung des Ergebnisses dienen. Die Auswertung der Signale U1, U2, U3 erfolgt vorzugsweise in einem Rechner, der das für die jeweilige Darstellung gewünschte Signal erzeugt, z.B. für die Darstellung eines Zeigers auf einem Bildschirm oder Signale für eine numerische Angabe der Feldrichtung.

Die Erfindung ist anwendbar bei allen Fahrzeugen mit Navigation wie Flugzeugen, Schiffen, Autos mit Verkehrsfindung und Einrichtungen, bei denen die einfache und störfreie Ermittlung des wirksamen Erdfeldes nützlich oder notwendig ist.

## Patentansprüche

1. Elektronischer Kompaß mit Sensoren, deren Ausgangsignal von der Größe und Richtung der sie durchsetzenden Magnetfelder (Hy) abhängig ist und denen eine mit einer Taktspannung (Ut) gespeiste Spule (4) für ein Erregerfeld (Hx) zugeordnet ist, wobei das Erregerfeld (Hx) die Empfindlichkeitsrichtung umpolt, so daß das Ausgangssignal der Sensoren eine Wechselspannung ist, **dadurch gekennzeichnet**, daß drei Sensoren (1, 2, 3) unter einem Winkel von 120° angeordnet sind und die Ausgangssignale so abgetastet und summiert werden, daß Fehler aufgrund von Unterschieden in der Signalverstärkung verhindert werden.

2. Kompaß nach Anspruch 1, **dadurch gekennzeichnet**, daß die Ausgangssignale (Ua) der drei Sensoren (1, 2, 3) während einer Halbwelle (H1) der Taktspannung (Ut) zeitlich nacheinander ausgewertet und in einem gemeinsamen Verstärker (11) verstärkt werden.

3. Kompaß nach Anspruch 1, **dadurch gekennzeichnet**, daß der Verstärkungsweg eine Wechselspannungskopplung (C) mit Gleichstromtrennung aufweist.

4. Kompaß nach Anpruch 2, **dadurch gekennzeichnet**, daß die drei sequentiellen Ausgangssignale des Verstärkers (11) durch getastete Halteschaltungen (6, 7, 8) in drei simultane, kontinuierliche Signale (U1, U2, U3) für die Meßwertdarstellung umgewandelt werden.

5. Kompaß nach Anspruch 2, **dadurch gekennzeichnet**, daß für die Darstellung der Richtung des Erdfeldes drei Ergebnisse aus dem ersten und zweiten, dem ersten und dritten sowie dem zweiten und dritten Signal gebildet und deren Mittelwert verwendet wird.

6. Kompaß nach Anspruch 2, **dadurch gekennzeichnet**, daß die Verstärkung des Verstärkers (11) in Abhängigkeit von der Amplitude der Signale (U1, U2, U3) so geregelt ist, daß der Verstärker (11) durch das Signal mit der größten Amplitude stets voll ausgesteuert ist.

7. Kompaß nach Anspruch 6, **dadurch gekennzeichnet**, daß die Amplitude der analogen Signale (U1, U2, U3) so geregelt ist, daß im Signalweg liegende A/D-Wandler stets annähernd voll ausgesteuert sind.

8. Kompaß nach Anspruch 6, **dadurch gekennzeichnet**, daß aus der Größe der Regelspannung (Ur) eine Anzeige für die absolute Größe des Erdfeldes abgeleitet ist.

9. Kompaß nach Anspruch 2, **dadurch gekennzeichnet**, daß jeweils das Ausgangssignal des Sensors (1, 2, 3) an den Eingang eines Differenzverstärkers (5) angelegt ist, an dessen Ausgang (a) ein Ende eines Kondensators (6) angeschlossen ist, dessen anderes Ende (b) während der ersten Halbwelle (H1) der Taktspannung (Ut) über einen ersten Schalter (7) geerdet und während der zweiten Halbwelle (H2) der Taktspannung (Ut) über einen zweiten Schalter (8) mit dem weiteren Signalweg (c) verbunden ist.

10. Kompaß nach Anspruch 9, **dadurch gekennzeichnet**, daß jeweils während der ersten Halbwelle (H1) die ersten Schalter (7) der drei Sensoren (1, 2, 3) gleichzeitig und während der zweiten Halbwelle (H2) die zweiten Schalter (8, 9, 10) der drei Sensoren (1, 2, 3) zeitlich nacheinander für die Signalverwertung betätigt werden.

## Claims

1. An electronic compass with sensors of which the output signal is dependent on the magnitude and direction of the magnetic field (Hy) passing through them and with which a coil (4) for an exciter field (Hx), fed with a pulse voltage (Ut), is associated, the exciter field (Hx) changing the polarity of the direction of the sensitivity, so that the output signal of sensors is an alternating current voltage, characterised in that three sensors (1, 2, 3) are arranged at an angle of 120° and the output signals are so sampled and summed that errors due to differences in the signal amplification are prevented.

2. A compass according to Claim 1, characterised in that the output signals (Ua) of the three sensors (1, 2, 3) are evaluated one after another in time during the half wave (H1) of the pulse voltage (Ut) and are amplified in a common amplifier (11).

3. A compass according to Claim 1, characterised in that the amplification path comprises an alternating current voltage coupling (C) with direct current separation.

4. A compass according to Claim 2, characterised in that the three sequential output signals of the amplifier (11) are converted, by sampled holding circuits (6, 7, 8) into three simultaneous continuous signals (U1, U2, U3) for the measured value presentation.

5. A compass according to Claim 2, characterised in that for the presentation of the direction of the earth's field three results are formed from the first and second, the first and third and the second and third signal, and the mean value of these is used.

6. A compass according to Claim 2, characterised in that the amplification of the amplifier (11) is so regulated, in dependency on the amplitude of the signals (U1, U2, U3), that the amplifier (11) is always controlled to full output by the signal having the greatest amplitude.

7. A compass according to Claim 6, characterised in that the amplitude of the analogue signals (U1, U2, U3) is so regulated that A/D transformers located in the signal path are always approximately completely controlled to full output.

8. A compass according to Claim 6, characterised in that an indication of the absolute value of the earth's field is derived from the magnitude of the regulating voltage (Ur).

9. A compass according to Claim 2, characterised in that at all times the output signal of the sensor (1, 2, 3) is applied to the input of a differential amplifier (5) to the output (a) of which one end of a capacitor (6) is connected, of which the other end is earthed by way of a first switch during the first half wave (H1) of the pulsed voltage (Ut) and connected with the rest of the signal path (c) by way of a second switch (8) during the second half wave (H2) of the pulsed voltage.

10. A compass according to Claim 9, characterised in that at all times during the first half was (H1) the first switches (7) of the three sensors (1, 2, 3) are actuated simultaneously, and during the second half wave (H2) the second switches (8, 9, 10) of the three sensors (1, 2, 3) are actuated one after another in time, for the signal utilisation.


## Revendications

1. Compas électronique avec des détecteurs dont le signal de sortie est fonction de la grandeur et du sens des champs magnétiques (Hy) qui les traverse et auxquels est affectée une bobine (4) pour un champ d'excitation (Hx) qui est alimentée avec une tension de synchronisation (Ut), le champ d'excitation (Hx) inversant le sens de sensibilité si bien que le signal de sortie des détecteurs est une tension alternative, **caractérisé en ce que** trois détecteurs (1, 2, 3) sont placés en formant un angle de 120° et que les signaux de sortie sont échantillonnés et additionnés de telle manière que l'on évite les erreurs dûes aux différences de l'amplification des signaux.

2. Compas selon la revendication 1, **caractérisé en ce que** les signaux de sortie (Ua) des trois détecteurs (1, 2, 3) sont exploités l'un après l'autre dans le temps pendant une demi-onde (HI) de la tension de synchronisation (Ut) et qu'ils sont amplifiés dans un amplificateur commun.

3. Compas selon la revendication 1, **caractérisé en ce que** le parcours d'amplification présente un couplage de tension alternative (C) avec interruption du courant continu.

4. Compas selon la revendication 2, **caractérisé en ce que** les trois signaux de sortie séquentiels de l'amplificateur (11) sont transformés par des circuits de maintien (6, 7, 8) par impulsions en trois signaux (U1, U2, U3) continus simultanés pour la représentation de la valeur mesurée.

5. Compas selon la revendication 2, **caractérisé en ce que**, pour la représentation du sens du champ terrestre, on forme trois résultats à partir du premier et du second signal, du premier et du troisième ainsi que du second et du troisième et que l'on utilise leur moyenne.

6. Compas selon la revendication 2, **caractérisé en ce que** l'amplification de l'amplificateur (11) est réglée en fonction de l'amplitude des signaux (U1, U2, U3) de manière à ce que l'amplificateur (11) est constamment réglé au maximum par le signal à l'amplitude la plus grande.

7. Compas selon la revendication 6, **caractérisé en ce que** l'amplitude des signaux analogiques (U1, U2, U3) est réglée de manière à ce que les convertisseurs analogiques-numériques qui se trouvent dans le parcours du signal sont toujours approximativement réglés au maximum.

8. Compas selon la revendication 6, **caractérisé en ce** qu'un affichage de la grandeur absolue du champ terrestre est dérivé de la grandeur de la tension de réglage (Ur).

9. Compas selon la revendication 2, **caractérisé en ce que** respectivement le signal de sortie du détecteur (1, 2, 3) est appliqué à l'entrée d'un amplificateur différenciateur (5), à la sortie (a) duquel est branchée une

6

extrémité d'un condensateur (6) dont l'autre extrémité (b) est mise a la terre pendant la première demi-onde (H1) de la tension de synchronisation (Ut) par un premier commutateur (7) et est reliée au reste du parcours du signal (c) pendant la seconde demi-onde (H2) de la tension de synchronisation (Ut) par un second commutateur.

10. Compas selon la revendication 9, **caractérisé en ce que** respectivement pendant la première demi-onde (H1) les premiers commutateurs (7) des trois détecteurs (1, 2, 3) sont actionnés simultanément et que pendant la seconde demi-onde (H2) les seconds commutateurs (8, 9, 10) sont actionnés l'un après l'autre dans le temps pour l'exploitation du signal.

Fig.1

Fig.2

Fig.3

Fig.4

Fig.5